(19) **Europäisches Patentamt**

**European Patent Office**

**Office européen des brevets**

(11) **EP 0 442 503 B2**

(12) **NEUE EUROPÄISCHE PATENTSCHRIFT**

(45) Veröffentlichungstag und Bekanntmachung des Hinweises auf die Entscheidung über den Einspruch:
**13.01.1999 Patentblatt 1999/02**

(51) Int. Cl.$^6$: **B01J 20/34**

(45) Hinweis auf die Patenterteilung:
**04.05.1994 Patentblatt 1994/18**

(21) Anmeldenummer: **91102111.1**

(22) Anmeldetag: **14.02.1991**

(54) **Verfahren zur Regenerierung von Adsorbern**

Process for regeneration of adsorbents

Procédé pour la régénération d'adsorbants

(84) Benannte Vertragsstaaten:
**AT CH DE FR IT LI NL**

(30) Priorität: **14.02.1990 DE 4004532**

(43) Veröffentlichungstag der Anmeldung:
**21.08.1991 Patentblatt 1991/34**

(73) Patentinhaber:
**FRAUNHOFER-GESELLSCHAFT ZUR FÖRDERUNG DER ANGEWANDTEN FORSCHUNG E.V.**
**80636 München (DE)**

(72) Erfinder:
• **Wnuk, Ralf**
**W-7142 Marbach/N (DE)**
• **Chmiel, Horst**
**W-7250 Leonberg (DE)**

(74) Vertreter:
**Münich, Wilhelm, Dr. et al**
**Kanzlei Münich, Steinmann, Schiller**
**Wilhelm-Mayr-Str. 11**
**80689 München (DE)**

(56) Entgegenhaltungen:
| | |
|---|---|
| EP-A- 18 478 | EP-A- 312 743 |
| EP-A- 343 284 | DE-A- 3 213 592 |
| DE-A- 3 726 431 | DE-C- 3 518 871 |
| US-A- 4 553 983 | US-A- 4 689 054 |

• **PATENT ABSTRACTS OF JAPAN, Band 13, Heft 39, (C-563)[3387]; & JP-A-63 236 504 *Zusammenfassung; Figur***
• **Vorträge des VLT-Seminars "Trenntechniken", 19-20/02/1987 in Flein**

EP 0 442 503 B2

Printed by Xerox (UK) Business Services
2.16.7/3.6

## Beschreibung

Die Erfindung betrifft ein Verfahren zur Regenerierung von Adsorbern, wie sie z.B. in der Lösungsmittelrückgewinnung eingesetzt werden.

Um große Mengen von mit Lösungsmitteln beladener Abluft geringer Konzentrationen, von z.B. 0,5-50 g/m$^3$ Lösungsmittel, wie sie etwa in Bereichen der Klebstoff-, der Band- oder der Filmherstellung, der Druckindustrie oder auch der chemischen Reinigungen anfallen, auf Grenzwerte der beispielsweise in Deutschland geltenden TA-Luft (Technische Anleitung Luft) zu reinigen, ist die Adsorption häufig die einzige Alternative. Als Adsorbentien werden z.B. Aktivkohlen oder Kieselgele eingesetzt. Bei den verschiedenen Adsorptionsverfahren erfolgt die Gewinnung oder Rückgewinnung von Lösungsmitteln in einem Wechsel zwischen Adsorption des Lösungsmittels am Adsorbens und nachfolgender Desorption. Dabei ist der aufwendigste Schritt die Desorption. Die Kosten der Regenerierung oder notfalls der Entsorgung des beladenen Adsorbens begrenzen daher den Einsatzbereich.

Die Regenerierung erfolgt entweder thermisch durch Temperaturwechselverfahren, oder durch Drucksenkung in Druckwechselverfahren, oder durch Verdrängungsverfahren mit einem Desorptionsmittel. In allen Fällen wird ein Spülgas, in der Regel Wasserdampf oder ein Inertgas, wie z.B. Stickstoff, verwendet, um das desorbierte Lösungsmittel aus dem Adsorbens auszutragen. Anschließend wird der Desorbatstrom weiterbehandelt, indem das Lösungsmittel vom Spülgas getrennt wird

Die Aufarbeitung und Abtrennung des Lösungsmittels aus dem Desorbatstrom erfolgt gemäß der US-A-4 689 054 dadurch, daß eine Zustandsänderung des Lösungsmittels durch Kompression oder durch Temperaturänderung herbeigefuhrt wird, die eine Abtrennung des Lösungsmittels aus dem Desorbatstrom ermöglicht. Der für die Zustandsänderung des Lösungsmittels notwendige Enthalpiebedarf ergibt sich aus der Lösungsmittelmenge und der für die entsprechende Zustandsänderung notwendigen spezifischen Enthalpie.

Ein weiteres Verfahren zur Aufarbeitung und Abtrennung von adsorbierten Stoffen ist in der JP-A-63-236 504 beschrieben. Bei diesem Verfahren wird eine Gas-Permeationsmembran verwendet, durch die der als Desorbatstrom verwendete Wasserdampf zur Permeatseite permeirt, so daß die abzutrennenden Stoffe zurückbleiben.

Beide bekannten Verfahren haben übereinstimmend den Nachteil, daß der tatsächlich notwendige Enthalpieeintrag um ein Vielfaches höher ist, und zwar deswegen, weil gleichzeitig der gesamte Desorbatstrom einer Zustandsänderung unterworfen wird. Dies begründet den hohen energetischen Aufwand für die Desorption.

Um eine Abgabe der Desorptionsgase nach außen zu verhindern werden diese häufig im Kreislauf durch den zu regenerierenden Adsorber geführt. Die Abtrennung des desorbierten Lösungsmittels erfolgt durch Kondensation. Wird Wasserdampf als Spülgas verwendet, so fällt das Kondensat in wässriger Phase an, und je nach Lösungsmittel kommen dann verschiedene Verfahren zur Wasser/Lösungsmittel-Trennung zum Einsatz.

Vorschläge zur thermischen Regenerierung mit Heißgas sind beispielsweise aus der FR 25 80 947 A1 bekannt. Dort wird das Lösungsmittel aus dem Desorbatstrom mittels einer Kühlfalle abgetrennt, wobei der Desorbatstrom anschließend wieder auf Desorptionstemperatur aufgeheizt wird. Die Kühlung und erneute Aufheizung erfordert einen sehr hohen Energiebedarf, so daß die Regenerierung ganz erhebliche Kosten verursacht.

Bei Untersuchungen zur Adsorptionskapazität von Aktivkohle und deren Regenerierung werden je nach Lösungsmittel und Eintrittskonzentration, die im Bereich von 0,3-40 g/m$^3$ liegen kann, Beladungen der Aktivkohle von 0,2 bis 0,4 kg Lösungsmittel pro kg Aktivkohle erreicht. Die Austrittskonzentration der Abluft liegt dabei in der Größenordnung von 20 mg/m$^3$. Die zur Regenerierung eingesetzen Spülgasmengen lassen sich in der Verfahrensführung für die Wasserdampfregenerierung auf 3 bis 6 kg Dampf pro kg Lösungsmittel senken.

An anderen Adsorbentien sind z. B. in der EP 00 30 921 B1 Versuche zur Adsorption von 1,2,4-Trichlor-benzol an Kieselgel durchgeführt worden, die ein Verhältnis von Dampf- zu Lösungsmittelmenge von 1,6 bis 3 aufweisen. Aus diesen Untersuchungen ergibt sich, daß die üblichen, erreichbaren Konzentrationen des Lösungsmittels im Spülgasstrom (Desorbatstrom) bei ca. 25 Gew-% liegen.

Zur Erhöhung der Kapazität des Adsorbens ist bei einer Kreislaufführung des Spülgasstromes der Lösungsmittelgehalt vor dessen erneuten Eintritt in den Adsorber niedrig zu halten. Der für eine ausreichende Desorption zulässige Restgehalt an Lösungsmitteln ergibt sich aus den physikalischen Eigenschaften des Adsorbens, dem Feuchtigkeitsgehalt der Abluft und den Anforderungen des Einzelfalls. Es ist daher anzustreben, den Spülgasstrom (Desorbatstrom) auf Restgehalte an Lösungsmittel von weniger als 1 Gew-% abzureichern. Ein gravierender Nachteil aller bekannter Verfahren zur Reinigung von Desorbatströmen ist, daß diese eine verfahrenstechnische Behandlung des gesamten Desorbatstroms erfordern.

Aus der DE 29 36 873 C2 ist ein Verfahren zur thermischen Regeneration beladener Sorptionsmaterialien bekannt, das jedoch aus energetischen und wirtschaftlichen Gesichtspunkten äußerst nachteilhaft erscheint. Die thermodynamische Güte einer Anlage ist am besten durch eine exergetische Bilanzierung bewertbar. Vereinfacht ausgedrückt beschreibt die Exergie den Anteil der Energie. der in jede andere, technisch verwertbare Energieform umgewandelt werden kann.

Bei dem in DE 29 36 873 C2 beschriebenen Verfahren erfolgt die Energieumwandlung über einen Wärmepumpenprozeß. Thermodynamisch betrachtet besitzt jeder Wärmepumpenprozeß einen maximalen exergetischen Wirkungsgrad, da bei jeder Wärmeübertragung Exergieverluste auftreten. Für die Wärmeübertragung lassen sich die Exergieverluste mit der Gleichung:

$$dE_v/dt = Tu * (T_1 - T_2) * dQ/dt / (T_1 * T_2)$$

beschreiben. Diese Gleichung macht deutlich, daß bei dem in DE 29 36 873 C2 beschriebenen Prozeß erhebiche Exergieverluste auftreten, da große zu übertragende Temperaturdifferenzen zwischen $T_1$= Desorptionstemperatur und $T_2$= Kondensationstemperatur vorhanden sind. Hinzu kommt die Tatsache, daß der gesamte Spülgasvolumenstrom zwischen großen Temperaturdifferenzen zu "shiften" ist, bei denen selbst durch den Einsatz von Wärmepumpen mit optimalen technischen Wirkungsgrad große Exergieverluste auftreten. Darüberhinaus ist bei diesem Verfahren der Einsatz einer (mindestens) zweistufigen Wärmepumpe erforderlich, was erhebliche Investitionsaufwendungen bedingt.

Aufgabe der Erfindung ist es, ein Verfahren zur Regenerierung von Adsorbern anzugeben, mit dem eine Aufarbeitung des Desorbatstroms ermöglicht wird, bei der die Kosten für den Energieeintrag deutlich niedriger als bei den bekannten Verfahren gehalten werden. Ferner soll das Verfahren für alle Adsorptions- und Regenerierungsverfahren anwendbar sein, und eine kontinuierliche Prozeßführung ermöglichen.

Der Erfindung liegt der Gedanke zugrunde, die desorbierten Stoffe durch Gaspermeation über eine semipermeable Löslichkeitsdiffusionsmembran aus dem Desorbatstrom zu entfernen.

Hierzu wird ein Verfahren zur Regenerierung von Adsorbern in einem vorzugsweise geschlossenen Kreislauf, in dem die adsorbierten Stoffe desorbiert werden und einen Desorbatstrom bilden, aus dem die Stoffe entfernt werden, und der abgereichert dem Adsorber wieder zugeführt wird, dadurch weitergebildet, daß der Desorbatstrom direkt in mindestens ein Pervaporationsmodul geleitet wird, in dem die zu entfernenden Stoffe durch Gaspermeation über eine semipermeable Löslichkeitsdiffusionsmembran aus dem Desorbatstrom entfernt werden.

Membrane sind bislang zur Regenerierung von Adsorbern nicht in Betracht gezogen worden, da bei höheren Temperaturen, wie sie bei einer üblichen Verfahrensführung erforderlich sind, der Spülgasstrom über die Membran zunimmt, während die Permeabilität für Lösungsmittel abnimmt. Erfindungsgemäß ist jedoch festgestellt worden, daß die Selektivität von semipermeablen Membranen für ein energetisch vorteilhaftes Verfahren ausreichend ist. Ferner ist erkannt worden, daß der Desorptionsvorgang für alle, für die Funktionsfähigkeit des Verfahrens bedeutenden Lösemittel aus dem Spülkreislauf ausreichend ausfällt.

Das erfindungsgemäße Verfahren bietet gegenüber dem Stand der Technik den Vorteil, daß es bei der Weiterbehandlung des Desorbatstromes eine Temperatur- bzw. eine Zustandsänderung des gesamten Desorbatstroms vermeidet. Zur Abtrennung der desorbierten Stoffe aus dem Desorbatstrom und zu dessen Weiterbehandlung wird nicht der gesamte Desorbatstrom abgekühlt bzw. kondensiert, sondern nur das Permeat der Gaspermeation, so daß nach der Abtrennung der desorbierten Stoffe der abgereicherte Desorbatstrom nicht mehr erwärmt bzw. verdampft werden muß, wenn er erneut als Spülgasstrom eingesetzt werden soll. Dadurch wird eine enorme Reduzierung der Energie, von bis zu 80 % möglich.

Das erfindungsgemäße Verfahren ist dadurch den üblichen Regenerierungsmethoden wirtschaftlich weit überlegen. Da das erfindungsgemäße Verfahren zur Regenerierung von Adsorbern in einem abgeschlossen Kreislaufsystem erfolgt, entstehen keine nachgeschalteten Umweltprobleme.

Aufgrund der modularen Bauweise des erfindungsgemäßen Verfahrens, besitzt es gegenüber schwankenden Abluftmengen und gegenüber schwankenden Konzentrationen der Schadstoffe in der Abluft eine hohe Flexibilität. Bei den bekannten Verfahren nach dem Stand der Technik ist dagegen eine energetisch zufriedenstellende Anpassung nur mit hohem technischen Aufwand möglich.

Durch den modularen Aufbau der Pervaporationseinheit ermöglicht das erfindungsgemäße Verfahren auch hier eine Anpassung und erhöht dadurch die Flexibilität des Gesamtverfahrens.

Das erfindungsgemäße Verfahren ist bei allen üblichen Regenerierungsverfahren anwendbar, bei denen gasförmige Desorbatströme entstehen. Solche Desorbatströme können z.B. durch Temperaturerhöhung des Adsorbens mittels eines heißen Inertgasstromes entstehen, ferner durch Drucksenkung im Adsorber, verbunden mit einer Spülung mit Inertgas, oder durch Desorption der adsorbierten Stoffe mittels eines Desorptionsmittels. Ferner ist das erfindungsgemäße Verfahren bei allen üblichen Adsorptionsverfahren einsetzbar, wie etwa bei Festbettverfahren, sowie bei Verfahren mit bewegten oder mit pulverförmigen Adsorptionsmitteln. Als Inertgas für die Spülung können alle gängigen Spülgase, wie z.B. Wasserdampf oder Stickstoff, eingesetzt werden. Enthält der Desorbatstrom ein Stoffgemisch, das abgetrennt bzw. aufgetrennt werden soll, so kann diese Abtrennung dadurch erfolgen, daß man den Desorbatstrom hintereinander durch mehrere Pervaporationsmodule leitet, wobei jeder Pervaporationsmodul mit einer für jeweils eine Komponente des Stoffgemisches semipermeabelen Membran ausgestattet ist.

Als Löslichkeitsdiffusionsmembrane sind alle temperaturfesten Membranen geeignet, wobei sich die jeweils einsetzbaren Membranen nach dem Anwendungsfall richten und von der Temperatur und von der Art der desorbierten bzw. permeierenden Stoffe abhängig sind. Bevorzugte Ausführungsformen des erfindungsgemäßen Verfahrens verwenden Löslichkeitsdiffusionsmembranen mit einer porösen Unterstruktur. Derartige Unterstrukturen sind beispielsweise in der DE 35 18 871 A1 beschrieben.

Das treibende Partialdruckgefälle im Pervaporationsmodul für die permeierenden Stoffe kann z.B. dadurch erzeugtwerden, daß auf der Rückseite der Löslichkeitsdiffusionsmembran ein Unterdruck erzeugt wird, oder dadurch, daß auf der Rückseite der Löslichkeitsdiffusionsmembran ein Trägergasstrom vorbeigeleitet wird, der das Permeat von der Membran entfernt, wie es z.B. in der DE 37 26 431 A1 beschrieben wird.

Bei geeignet gewählter Selektivität der Membran ist der desorbierte Stoff die bevorzugt permeierende Komponente, die sich im Permeat anreichert. Ist man daran interessiert, einen mit desorbierten Stoffen angereicherten Permeatstrom zu erhalten, so ist es zweckmäßig, das Partialdruckgefälle durch Unterdruck zu erzeugen.

Um eine Teilkondensation des Desorbatstroms im Pervaporationsmodul zu verhindern, wird bei einer weiteren Ausführungsform des erfindungsgemäßen Verfahrens eine Beheizung der Membran durchgeführt, so daß die Membran eine höhere Temperatur als der Desorbatstrom besitzt. Geeignete Beheizungen sind in der DE 35 18 871 A1 beschrieben. Eine Kondensation des Desorbatstromes führt zu einer laminaren Grenzschicht auf der Membran, sodaß dadurch deren Transportwiderstand vergrößert werden kann. Ferner kann eine Kondensation auf der Membran erhebliche Probleme bei der Regelung des Gesamtprozesses bereiten, weil sich durch die Ausbildung der laminaren Grenzschicht die Betriebsparameter Permeatfluß, transmembraner Druck und Permeatzusammensetzung drastisch ändern können.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird.

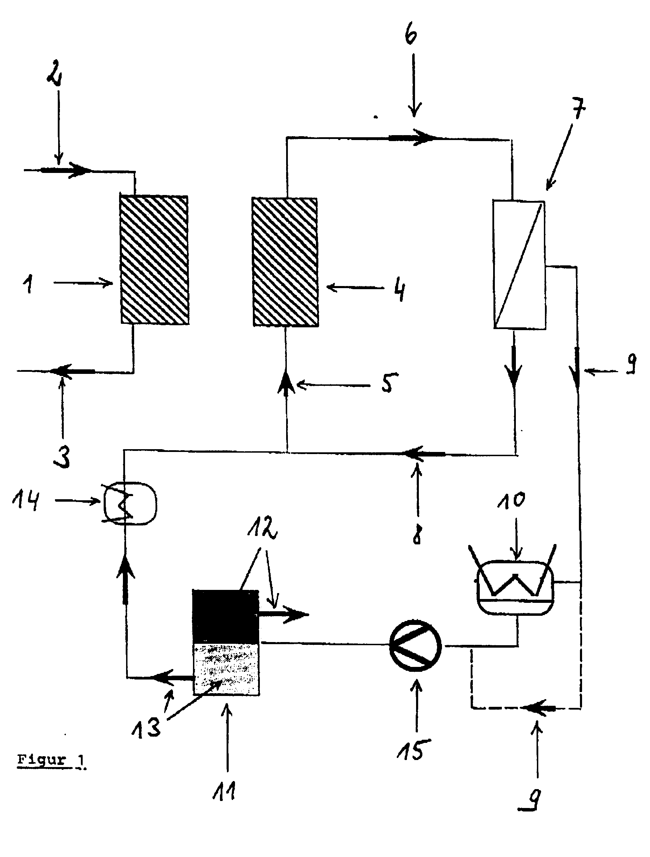

Figur 1     zeigt das erfindungsgemäße Verfahren am Beispiel der Reinigung lösungsmittelhaltiger Abluft und der Regenerierung unter Verwendung von Wasserdampf als Spülgasstrom.

Am Beispiel eines thermischen Regenerierungsverfahrens, bei dem organische Lösungsmittel (Benzindäinpfe) durch Adsorption aus der Abluft entfernt werden und welches als Spülgas Wasserdampf verwendet, wird anhand von Figur 1 das erfindungsgemäße Verfahren näher erläutert. Ein Adsorber A (1) ist auf Adsorption geschaltet; die lösungsmittelhaltige Abluft (2) wird in den Adsorber A (1) geleitet und verläßt diesen als Reinluft (3). Ein zweiter Adsorber B (4), der für die folgende Beschreibung als erschöpft angenommen wird. wird vom Wasserdampfstrom (5) mit Desorptionstemperatur durchströmt und aufgeheizt. Der stark mit Lösungsmittel (25 Gew-%) angereicherte Wasserdampfstrom (Desorbatstrom) (6) wird mit einer Temperatur von 120 °C und bei einem Druck von 2 bar direkt in ein Pervaporationsmodul (7) geleitet, in dem der Desorbatstrom mittels Gaspermeation auf 5 Gew- % abgereichert wird. Der so abgereicherte Wasserdampfstrom (B) verläßt den Pervaporationsmodul und wird erneut dem Adsorber B (4) zugeführt.

Wird als Spülgasstrom Wasserdampf verwendet und handelt es sich bei den adsorbierten bzw. desorbierten Stoffen um organische Lösungsmittel, so gibt es in Abhängigkeit vom Siedepunkt der Lösungsmittel zwei Verfahrensvarianten für die weitere Behandlung des Permeates, da sich bei sehr niedrigen Siedepunkten die direkte Kondensation des Permeates als ungünstig erweist. Am Beispiel eines Wasserdampfstromes als Spülgasstrom und der Erzeugung des Partialdruckgefälles durch Unterdruck werden die beiden Verfahrensvarianten näher erläutert.

Dabei ist zu berücksichtigen, daß immer ein Teil des Spülgasstromes durch die semipermeable Membran wandert.

Variante 1:

Variante 1 ist in Figur 1 schematisch dargestellt. Das gewonnene, wasserdampfhaltige Permeat (9) wird vor einer Vakuumpumpe (15) in einem Kondensator (10) kondensiert und in einem Settler (11) in zwei Phasen geteilt. Die organische Phase (12) wird abgezogen und direkt wieder verwendet. Die wässrige Phase (13) mit einem sehrgeringen Gehalt an Lösungsmittel wird abgezogen, in einem Verdampfer (14) verdampft und erneut dem Desorbatkreislauf zugeführt. Diese Verfahrensführung hat den Vorteil, daß die Vakuumpumpe (15) vergleichsweise klein dimensioniert werden kann, da das Vakuum durch die Volumenkontraktion des Kondensates aufrechterhalten wird, und die Fördermenge der Vakuumpumpe nur für das entsprechende flüssige Kondensatvolumen auszulegen ist.

Variante 2:

Variante 2 ist in Figur 1 gestrichelt eingezeichnet. Liegt der Siedepunkt des Lösungsmittels bei Permeatdruck sehr tief, so kann eine wirtschaftliche Kondensation unmöglich werden. In diesem Fall wird das Permeat (9) über die Vakuumpumpe (15) verdichtet. Es kondensiert und teilt sich in dem Settler (11) in zwei Phasen. Die Weiterbehandlung der wässrigen und der organischen Phase erfolgt dann wie in der Verfahrensvariante 1. Wird die Desorption durch Temperaturerhöhung des Adsorbens bewirkt, so ist eine zusätzliche Möglichkeit zur Energieeinsparung gegeben, da in einer weiteren Ausführungsform des erfindungsgemäßen Verfahrens die Erwärmung des Verdampfers (14) durch innere Wärmekopplung mit dem Adsorber B (4) erfolgt, wenn dieser nach erfolgter Desorption wieder auf Betriebstemperatur gekühlt wird.

**Patentansprüche**

1.  Verfahren zur Regenerierung von Adsorbern in einem vorzugsweise geschlossenen Kreislauf, in dem die adsorbierten Stoffe in einen Desorbatstrom desorbiert werden, aus dem die Stoffe entfernt werden, und der abgereichert dem Adsorber wieder zugeführt wird,
    dadurch **gekennzeichnet,** daß der gasförmige Desorbatstrom direkt in mindestens ein Pervaporationsmodul geleitet wird, in dem die zu entfernenden Stoffe durch Gaspermeation über eine semipermeable Löslichkeitsdiffusionsmembran aus dem Desorbatstrom entfernt werden.

2.  Verfahren nach Anspruch 1,
    dadurch **gekennzeichnet,** daß der gasförmige Desorbatstrom dadurch erzeugt wird, daß die Temperatur des Adsorbens mittels eines heißen Inertgasstromes erhöht wird.

3.  Verfahren nach Anspruch 1 oder 2,
    dadurch **gekennzeichnet,** daß der gasförmige Desorbatstrom durch Drucksenkung im Adsorber und durch Spülung des Adsorbers mit einem Inertgas erzeugt wird.

4.  Verfahren nach einem der Ansprüche 1 bis 3,
    dadurch **gekennzeichnet,** daß der gasförmige Desorbatstrom durch Desorption der adsorbierten Stoffe mittels eines Desorptionsmittels erzeugt wird.

5.  Verfahren nach einem der Ansprüche 1 bis 4,
    dadurch **gekennzeichnet,** daß das inerte Spülgas Wasserdampf ist.

6.  Verfahren nach einem der Ansprüche 1 bis 5,
    dadurch **gekennzeichnet,** daß im Pervaporationsmodul das Partialdruckgefälle für die desorbierten Stoffe durch Anlegen eines Unterdruckes permeatseitig der Löslichkeitsdiffusionsmembran erzeugt wird.

7.  Verfahren nach einem der Ansprüche 1 bis 6,
    dadurch **gekennzeichnet,** daß im Pervaporationsmodul das Partiaidruckgefälle für die desorbierten Stoffe dadurch erzeugt wird, daß ein Trägergasstrom über die Rückseite der Membran geleitet wird, der das Permeat entfernt.

8.  Verfahren nach einem der Ansprüche 1 bis 7,
    dadurch **gekennzeichnet,** daß die Temperatur der Löslichkeitsdiffusionsmembran größer als die Temperatur des Desorbatstromes ist.

9.  Verfahren nach Anspruch 8,
    dadurch **gekennzeichnet,** daß die Membran heizbar ist

10. Verfahren nach einem der Ansprüche 5 bis 9,
    dadurch **gekennzeichnet,** daß das wasserdampfhaltige Permeat in einen Kondensator geleitet wird, in dem es kondensiert, daß das Kondensat in einen Settler geleitet und in eine wässrige und in eine nicht mit Wasser mischbare Phase getrennt wird, und daß die wässrige Phase abgezogen, verdampft und erneut dem Desorbatkreislauf zugeführt wird.

11. Verfahren nach einem der Ansprüche 5 bis 9,
    dadurch **gekennzeichnet,** daß das wasserdampfhaltige Permeat über eine Vakuumpumpe derart verdichtet wird, daß es kondensiert, daß das Kondensat in einen Settler geleitet und in eine wässrige und in eine nicht mitWasser mischbare Phase getrennt wird, und daß die wässrige Phase abgezogen, verdampft und erneut dem Desorbatkreislauf zugeführt wird.

12. Verfahren nach einem der Ansprüche 1 bis 11,
    dadurch **gekennzeichnet,** daß die Desorption durch Temperaturerhöhung erfolgt, daß das spülgashaltige Permeat kondensiert wird und die desorbierten Stoffe abgetrennt werden, so daß man abgereichertes, kondensiertes Spülgas erhält, daß das abgereicherte, kondensierte Spülgas erwärmt oder in einem Verdampferverdampft wird, und daß die zur Erwärmung bzw. Verdampfung des Spülgases benötigte Energie durch innere Wärmekopplung aus der Abkühlung des Adsorbens auf Betriebstemperatur gewonnen wird.

**Claims**

1.  Process of regenerating adsorbents in a preferably closed circuit where the adsorbed substances are desorbed in a desorbate flow from which the substances are extracted and which is supplied again to the adsorber in a depleted state,
    **characterised** in that the gaseous desorbate flow is passed directly into at least one pervaporation module where the substances to be extracted are removed from said desorbate flow by gas permeation through a semipermeable solubility diffusion membrane.

2.  Process according to Claim 1,
    **characterized** in that said gaseous desorbate flow is produced by an increase of the temperature of said adsorbent by means of a hot inert gas flow.

3. Process according to Claim 1 or 2,
   **characterised** in that said gaseous desorbate flow is produced by a reduction of the pressure in said adsorber and by flushing said adsorber with an inert gas.

4. Process according to any of Claims 1 to 3,
   **characterised** in that said gaseous desorbate flow is produced by desorption of said adsorbed substances by using a desorbing agent.

5. Process according to any of Claims 1 to 4,
   **characterised** in that said inert purifying gas is water vapour.

6. Process according to any of Claims 1 to 5,
   **characterised** in that in said pervaporation module the partial pressure gradient for the desorbed substances is created by the application of a vacuum on the permeate side of said solubility diffusion membrane

7. Process according to any of Claims 1 to 6,
   **characterised** in that in said pervaporation module the partial pressure gradient for the desorbed substances is created by passing a carrier gas flow along the rear side of said membrane which removes said permeate.

8. Process according to any of Claims 1 to 7,
   **characterised** in that the temperature of said solubility diffusion membrane is higher than the temperature of said desorbate flow.

9. Process according to Claim 8,
   **characterised** in that said membrane is adapted to be heated.

10. Process according to any of Claims 5 to 9,
    **characterised** in that said permeate carrying water vapour is introduced into a condenser where it condenses, that the condensate is introduced into a settler and fractioned into an aqueous phase and a phase immiscible with water, and in that said aqueous phase is evacuated, vaporised, and returned into the desorbate circuit.

11. Process according to any of Claims 5 to 9,
    **characterised** in that said permeate carrying water vapour is compressed by a vacuum pump such that it condenses, that the condensate is introduced into a settler and fractioned into an aqueous phase and a phase immiscible with water, and in that said aqueous phase is evacuated, vaporised, and returned into the desorbate circuit.

12. Process according to any of Claims 1 to 11,
    **characterised** in that desorption is carried through by an increase of the temperature, that the permeate carrying said purifying gas is condensed and that the desorbed substances are extracted so as to obtain a depleted condensed purifying gas, that said depleted condensed purifying gas is heated or vaporised in an evaporator, and in that the energy required for heating or vaporising said purifying gas is produced by internal thermal coupling from the cooling of said adsorbent to the operating temperature.

**Revendications**

1. Procédé pour la régénération d'adsorbants dans un circuit préférablement fermé, où les substances adsorbées sont désorbées dans un courant du désorbat d'où on extrait les substances, et qui, en état appauvri, est alimenté de nouveau à l'adsorbant,
   **caractérisé** en ce que ledit courant du désorbat est introduit directement dans au moins un module de pervaporation, où les substances à extraire sont éliminées du courant du désorbat par la perméation de gaz à travers une membrane semi-perméable de diffusion à solubilité.

2. Procédé selon la revendication 1,
   **caractérisé** en ce que ledit courant du désorbat gazeux est produit par une augmentation de la température de l'adsorbant moyennant un courant de gaz inerte chaud.

3. Procédé selon la revendication 1 ou 2,
   **caractérisé** en ce que ledit courant du désorbat gazeux est produit par un abaissement de la pression dans le dispositif adsorbant et par un lavage de l'adsorbant par un gaz inerte.

4. Procédé selon une quelconque des revendications 1 à 3,
   **caractérisé** en ce que ledit courant du désorbat gazeux est produit par la désorption des substances adsorbées, en utilisant un agent désorbant.

5. Procédé selon une quelconque des revendications 1 à 4,
   **caractérisé** en ce que ledit gaz laveur inerte est de la vapeur d'eau.

6. Procédé selon une quelconque des revendications 1 à 5,
   **caractérisé** en ce qu'à l'intérieur dudit module de pervaporation la différence de pression partielle pour les substances désorbées est créée par l'application d'une dépression du côté du perméat de ladite membrane de diffusion à solubilité.

**7.** Procédé selon une quelconque des revendications 1 à 6, **caractérisé** en ce qu'à l'intérieur dudit module de pervaporation la différence de pression partielle pour les substances désorbées est créée en passant un courant de gaz porteur par la face arrière de ladite membrane, qui en extrait le perméat.

**8.** Procédé selon une quelconque des revendications 1 à 7, **caractérisé** en ce que la température de ladite membrane de diffusion à solubilité excède la température dudit courant du désorbat.

**9.** Procédé selon la revendication 8, **caractérisé** en ce que la membrane est chauffable.

**10.** Procédé selon une quelconque des revendications 5 à 9, **caractérisé** en ce que le perméat chargé de la vapeur d'eau est introduit dans un condensateur où il est condensé, en ce que le condensat est introduit dans un séparateur et fractionné en une phase aqueuse et une phase immiscible avec de l'eau, et en ce que ladite phase aqueuse est évacuée, vaporisée, et alimentée de nouveau au circuit du désorbat.

**11.** Procédé selon une quelconque des revendications 5 à 9, **caractérisé** en ce que le perméat chargé de la vapeur d'eau est comprimé par une trompe à eau d'un degré qu'il est condensé, que le condensat est introduit dans un séparateur et fractionné en une phase aqueuse et une phase immiscible avec de l'eau, et en ce que la phase aqueuse est évacuée, vaporisée, et alimentée de nouveau au circuit du désorbat.

**12.** Procédé selon une quelconque des revendications 1 à 11, **caractérisé** en ce que la désorption se fait par augmentation de la température, que le perméat chargé de gaz laveur est condensé et que les substances désorbées sont extraites de façon à obtenir un gaz laveur condensé appauvri, en ce que ledit gaz laveur condensé appauvri est chauffé ou vaporisé dans un vaporisateur, et en ce que l'énergie requise pour chauffer ou vaporiser le gaz laveur est produite par liaison par chaleur intérieure du refroidissement de l'adsorbant à la température de service.

Figur 1